**Europäisches Patentamt**

**European Patent Office**

**Office européen des brevets**

(19)

(11) Veröffentlichungsnummer: **0 045 943**
**B1**

(12) # EUROPÄISCHE PATENTSCHRIFT

(45) Veröffentlichungstag der Patentschrift:
**16.01.85**

(51) Int. Cl.⁴: **A 61 C 1/00**, A 61 C 1/08

(21) Anmeldenummer: **81106142.3**

(22) Anmeldetag: **05.08.81**

(54) **Technikhandstück, insbesondere für zahnärztliche Zwecke.**

(30) Priorität: **12.08.80 DE 8021596 U**

(43) Veröffentlichungstag der Anmeldung:
**17.02.82 Patentblatt 82/7**

(45) Bekanntmachung des Hinweises auf die Patenterteilung:
**16.01.85 Patentblatt 85/3**

(84) Benannte Vertragsstaaten:
**AT CH DE FR IT LI**

(56) Entgegenhaltungen:
**DE - B - 1 285 671**
**FR - A - 2 336 911**
**GB - A - 239 536**
**US - A - 1 653 212**

(73) Patentinhaber: **Siemens Aktiengesellschaft, Berlin und München Wittelsbacherplatz 2, D-8000 München 2 (DE)**

(72) Erfinder: **Phleps, Tilman, Hagenstrasse 18, D-6140 Bensheim (DE)**
Erfinder: **Goisser, Siegfried, Goethestrasse 12, D-6141 Einhausen (DE)**

ACTORUM AG

## Beschreibung

Die Erfindung bezieht sich auf ein Technikhandstück, insbesondere für zahnärztliche Zwecke, mit einer länglichen Griffhülse, welche eine Querschnittsform aufweist, deren Breitenmass im Griffbereich vom antriebsseitigen Ende aus bis auf etwa ⅔ der Gesamtlänge der Griffhülse konstant ist und deren Dickenmass vom mittleren Bereich der Griffhülse aus nach beiden Enden hin kleiner wird und welche an ihrer Oberfläche einander gegenüberliegende Profilierungen enthält.

Bei einem bekannten solchen Technikhandstück (FR-A 2 336 911) ist die Griffhülse aus zwei mit ihrer Grundfläche aneinanderstossenden Pyramidenstümpfen gebildet, deren Kanten praktisch über die gesamte Länge der Griffhülse abgeflacht sind. Durch den eckigen Querschnitt und die Abflachungen entstehen relativ scharfe Kanten bzw. Ecken, die sich insbesondere bei kräftigem Anfassen des Handstückes in die Hand eindrücken, was vom Benutzer als unangenehm empfunden wird und zu unerwünschten Belastungen und Ermüdungserscheinungen führen kann. Bei länger andauernden Arbeiten kann es daher leicht zu Verspannungen oder Verkrampfungen der das Handstück haltenden Hand bzw. im Arm des Benutzers kommen.

Bei zahnärztlichen Hand- und Winkelstücken, die nach Art eines Bleistiftes gehalten werden, ist es bekannt (US-A 1 653 212), den Griffkörper im Querschnitt ellipsenförmig auszubilden. Die Mantelfläche des aus zwei Hälften gebildeten Griffkörpers ist glatt, wodurch keine gute Griffigkeit gegeben ist.

Der Erfindung liegt die Aufgabe zugrunde, ein Technikhandstück der eingangs genannten Gattung anzugeben, das die angeführten Nachteile nicht aufweist, welches also einerseits ergonomisch günstig zu ergreifen ist und mit dem andererseits ein ermüdungsfreies Arbeiten bei guter Griffigkeit gewährleistet ist, die ein ungewolltes Verdrehen des Handstückes sowie ein axiales Ausgleiten aus der es umschliessenden Hand in der Handhabung weitgehend unterbindet.

Zur Lösung der gestellten Aufgabe wird bei einem Technikhandstück der eingangs genannten Gattung erfindungsgemäss vorgeschlagen, dass die Griffhülse in ihrer Aussenkontur im Querschnitt ellipsenförmig ausgebildet ist, wobei das Verhältnis der beiden Ellipsenachsen im mittleren Bereich der Griffhülse ungleich eins ist und gegen das werkzeug- und das antriebsseitige Ende hin gleich eins wird, so dass an den Enden ein kreisförmiger Querschnitt vorhanden ist, wobei die kleinere Ellipsenachse das Breitenmass und die grössere Ellipsenachse das Dickenmass repräsentieren, und dass die Profilierungen im Bereich des Überganges der Krümmungen von Haupt- zu Nebenscheitel der Ellipsen an lediglich zwei diametral einander gegenüberliegenden, mit ihrer Breite sich über die Nebenscheitel und mit ihrer Länge über mindestens ⅔ der gesamten Griffhülsenlänge erstreckenden Flächen in Form von im Querschnitt etwa rechteckigen Erhebungen und Vertiefungen, welche längs der Griffhülse verlaufende Nuten und Stege bilden, vorgesehen sind, wobei die Stege so ausgebildet sind, dass deren Oberflächen innerhalb der theoretischen Aussenkontur der Griffhülse liegen.

Durch die spezielle Querschnittsform der Griffhülse in Verbindung mit der balligen Krümmung längs der beiden Hauptscheitellinien der Ellipsen und den im wesentlichen gleichbleibenden Abmessungen in einer um 90° dazu versetzten Ansicht, also längs der Nebenscheitellinien, wird eine Handstückform erzielt, die der Hohlform einer Hand mit gebogenen Fingern anatomisch besser entspricht als ein Handstück mit kreisförmigem oder eckigem Querschnitt. Durch die lediglich zwei am Umfang vorhandenen, diametral einander gegenüberliegenden, die Profilierungen enthaltenden Flächenabschnitte, die im Bereich des Überganges der Krümmung von Haupt- zu Nebenscheitel der Ellipsen liegen, ist ein eindeutiger Zugriff zum Handstück beim Ergreifen des Handstückes gegeben. Durch die innerhalb der theoretischen Aussenkontur der Griffhülse liegenden Stege werden keine vorstehenden Kanten gebildet, wodurch das Handstück einerseits griffig ist und eine gute Sicherheit gegen ungewolltes Verdrehen sowie axiales Weggleiten aus der Hand bietet, andererseits aber ein ermüdungsfreies Arbeiten auch bei kräftiger Handhaltung des Handstückes gewährleistet.

Vorteilhafte Ausgestaltungen und Weiterbildungen der Erfindung sind in den Unteransprüchen enthalten.

Ein Ausführungsbeispiel der Erfindung wird nachfolgend anhand der Zeichnung näher erläutert.

Es zeigen:

Fig. 1 das erfindungsgemässe Technikhandstück in einer schaubildlichen Darstellung,

Fig. 2 die Griffhülse des Handstückes in einer Draufsicht,

Fig. 3 die Griffhülse nach Fig. 2 in einer um 90° um die Längsachse gedrehten Stellung,

Fig. 4 bis 6 Querschnitte von der Griffhülse an den in Fig. 2 angegebenen Stellen.

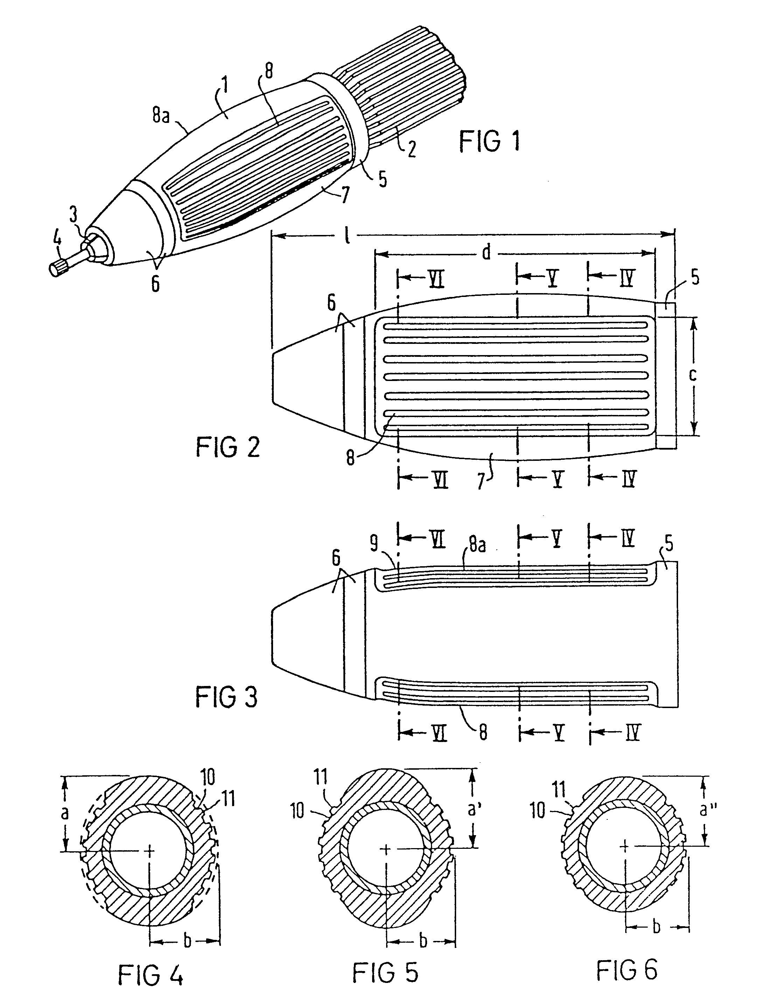

Die Fig. 1 zeigt in einer schaubildlichen Darstellung ein zahnärztliches Technikhandstück mit einer länglichen Griffhülse 1, in der eine in der Figur nicht dargestellte, von einem in den Darstellungen nur teilweise eingezeichneten Antriebsteil 2 antreibbare Welle gelagert ist, auf der eine Spannvorrichtung 3 zur Aufnahme eines rotierenden Werkzeuges 4 (Bohrer, Fräser od. dgl.) befestigt ist. Die Griffhülse ist vom Antriebsteil 2, das ein Elektro- oder ein Luftmotor sein kann, ab- und an diesem wieder ankuppelbar.

Griffhülse 1 und Antriebsteil 2 haben elliptische Querschnittsform, wobei das Antriebsteil 2 sowie das antriebsseitige Ende 5 und das werkzeugseitige Ende 6 der Griffhülse auf einen Querschnitt bezogen jeweils gleiche Ellipsenachsen haben, also einen kreisförmigen Querschnitt bilden, dagegen der mit 7 bezeichnete Mittelteil Querschnitte mit unterschiedlichen Ellipsenachsen aufweist.

Aus der perspektivischen Darstellung in Verbindung mit der einen Seitenansicht nach Fig. 2 geht hervor, dass die Griffhülse 1 in einer Betrachtungsebene etwa von der Mitte des Mittelteils 7 aus einerseits zum antriebsseitigen Ende 5 und andererseits zum werkzeugseitigen Ende 6 hin ballig gekrümmt ist; ferner, dass praktisch über den gesamten Mittelteil 7 bzw. über einen wesentlichen Teil der Länge der Griffhülse eine mit längs verlaufenden Profilierungen versehene Fläche 8 vorhanden ist. Auf der diametral gegenüberliegenden Seite der Griffhülse ist eine weitere solche Fläche (8a) vorhanden. Das Antriebsteil 2 enthält dieselbe Profilierung mit dem Unterschied, dass dort die Profilierung über den ganzen Umfang vorgesehen ist.

Die Fig. 2 und 3 zeigen die Griffhülse 1 jeweils in der Draufsicht, und zwar in zwei um 90° zueinander um die Handstücklängsachse gedrehten Stellungen. Ausgehend von dem antriebsseitigen Endteil 5, welches einen kreisförmigen Querschnitt hat, nimmt die Aussenkontur der Griffhülse (bezogen auf die Darstellung nach Fig. 2) zunächst bis zur Schnittlinie V/V zu, danach wieder ab, bis sie schliesslich am werkzeugseitigen Ende 6, welches wiederum kreisförmigen Querschnitt aufweist, ballig sich verjüngend zu dem in der Darstellung nicht eingezeichneten Werkzeug ausläuft. Die mit Profilierungen versehenen Flächen 8, 8a erstrecken sich, ausgehend vom antriebsseitigen Ende, über etwa ⅔ der Gesamtlänge 1 der Griffhülse. Sie haben über ihre Länge d gesehen eine konstante Breite c.

Wie aus Fig. 3 hervorgeht, sind die beiden Flächen 8, 8a gegenüber der übrigen, sich daran anschliessenden Kontur etwas vertieft angeordnet.

In Betrachtung der Fig. 2 und der Querschnittsdarstellungen entsprechend den Fig. 4 bis 6 wird deutlich, dass die Hauptachsen der Ellipsen, die den Querschnitt der Griffhülse bilden, von der Mitte des Mittelteils 7 aus sowohl zum werkzeugseitigen als auch zum antriebsseitigen Ende hin kleiner werden (vgl. Achsbezeichnung a, a′, a″ in Fig. 4 bis 6). In Betrachtung der Fig. 3 und der Querschnittsdarstellung nach den Fig. 4 bis 6 wird ausserdem deutlich, dass die Nebenachsen dieser Ellipsen bis zu der mit 9 bezeichneten Stelle im wesentlichen ein konstantes Mass haben, danach zum werkzeugseitigen Ende hin leicht abnehmen (vgl. Achsbezeichnung b, b′ in Fig. 4 bis 6). Das Verhältnis der beiden Ellipsenachsen a zu b ist also im mittleren Bereich der Griffhülse am grössten und nimmt zu den Enden 5, 6 hin bis zur Kreisform ab. Das zur Verdickung der Griffhülse im mittleren Bereich notwendige Verhältnis der beiden Ellipsenachsen liegt vorzugsweise bei 1,2:1, es kann auch höher, bis maximal 1,5:1, liegen.

Die beiden Flächen 8, 8a beginnen – wie aus den Fig. 4 bis 6 hervorgeht – etwa dort, wo die Krümmungen von Haupt- und Nebenscheitel der Ellipsen ineinander übergehen und enthalten im Querschnitt im wesentlichen rechteckige Erhebungen und Vertiefungen, die eine Vielzahl von längs verlaufenden Nuten 10 und Stege 11 bilden. Die Oberfläche der Stege ist gegenüber der übrigen Oberfläche etwas zurückgesetzt und vorteilhafterweise mit derselben elliptischen Krümmung versehen wie der übrige Teil der Griffhülse.

Zweckmässigerweise sind die Profilierungen auf den beiden Flächen 8 und 8a in einem Teilermass angeordnet, das der Anordnung auf dem Antriebsteil 2 (Fig. 1) entspricht, wodurch bei gleicher Ausbildung der Nuten und Stege die Profilierungen bei Ankuppeln von Antriebsteil und Griffhülse zueinander fluchtend ausgerichtet werden können.

Die Oberfläche der Griffhülse, insbesondere des Mittelteils 7 sowie des Antriebsteils 2, besteht aus einem elastisch verformbaren Material (Kunststoff), wodurch eine besonders hautfreundliche Anpassung an die das Handstück umschliessende Hand gegeben ist.

**Patentansprüche**

1. Technikhandstück, insbesondere für zahnärztliche Zwecke, mit einer länglichen Griffhülse, welche eine Querschnittsform aufweist, deren Breitenmass im Griffbereich vom antriebsseitigen Ende (5) aus bis auf etwa ⅔ der Gesamtlänge (1) der Griffhülse konstant ist und deren Dickenmass vom mittleren Bereich der Griffhülse (Fig. 5) aus nach beiden Enden (5, 6) hin kleiner wird und welche an ihrer Oberfläche einander gegenüberliegende Profilierungen enthält, dadurch gekennzeichnet, dass die Griffhülse (1) in ihrer Aussenkontur im Querschnitt ellipsenförmig ausgebildet ist, wobei das Verhältnis der beiden Ellipsenachsen (a, b) im mittleren Bereich der Griffhülse (Fig. 5) ungleich eins ist und gegen das werkzeug- und das antriebsseitige Ende hin gleich eins wird, so dass an den Enden (5, 6) ein kreisförmiger Querschnitt vorhanden ist, wobei die kleinere Ellipsenachse (Nebenachse b) das Breitenmass und die grössere Ellipsenachse (Hauptachse a) das Dickenmass repräsentieren, und dass die Profilierungen im Bereich des Überganges der Krümmungen von Haupt- zu Nebenscheitel der Ellipsen an lediglich zwei diametral einander gegenüberliegenden, mit ihrer Breite (c) sich über die Nebenscheitel und mit ihrer Länge (d) über mindestens ⅔ der gesamten Griffhülsenlänge (I) erstreckende Flächen (8, 8a) in Form von im Querschnitt etwa rechteckigen Erhebungen und Vertiefungen, welche längs der Griffhülse (1) verlaufende Nuten (10) und Stege (11) bilden, vorgesehen sind, wobei die Stege (11) so ausgebildet sind, dass deren Oberflächen innerhalb der theoretischen Aussenkontur der Griffhülse (1) liegen.

2. Technikhandstück nach Anspruch 1, dadurch gekennzeichnet, dass die Stege (11) eine ellipsenförmige Krümmung aufweisen.

3. Technikhandstück nach Anspruch 1, dadurch gekennzeichnet, dass die Längsstege (11) eine konstante Breite aufweisen und in einem Teilermass angeordnet sind, welches einer gleichmässigen Anordnung am Umfang eines Kreises entspricht.

4. Technikhandstück nach einem der Ansprüche 1 bis 3, dadurch gekennzeichnet, dass mit ihm ein Antriebsteil (2) gekuppelt ist, dessen Aussenkontur kreisförmig ist und an dessen Mantelfläche gleichmässig über den Umfang verteilt angeordnete Längsstege (11) enthält.

## Revendications

1. Pièce à main technique notamment pour dentisterie, du type comprenant une douille de préhension de forme allongée qui présente une forme à section transversale dont la dimension en largeur dans la zone de préhension est constante, depuis l'extrémité située côté entraînement (5) jusqu'aux ⅔ environ de la longueur totale (1) de la douille de préhension, et dont la dimension en épaisseur devient plus faible à partir de la zone médiane de la douille de préhension (fig. 5) jusqu'à ses deux extrémités (5, 6), et comportant sur sa surface des parties profilées disposées les unes en face des autres, caractérisée par le fait que le contour extérieur de la douille de préhension (1) est agencé en section transversale, avec une forme elliptique, le rapport des deux axes d'ellipse (a, b) étant différent de l'unité dans la zone médiane de la douille de préhension (fig. 5) et devenant égal à l'unité vers les extrémités côté entraînement et côté outil, de sorte que se présente aux deux extrémités (5, 6) une section transversale circulaire, le petit axe de l'ellipse (petit axe b) représentant ladite dimension en largeur et le grand axe (grand axe a) ladite dimension en épaisseur, et que les profilages sont prévus, dans la zone du passage des courbures des sommets principaux des ellipses à celles de leurs sommets secondaires, sous la forme de parties en saillie et en renfoncement à section transversale sensiblement rectangulaire et qui constituent des gorges (10) et des nervures (11) s'étendant le long de la douille de préhension, et ceci sur uniquement deux surfaces diamétralement opposées (8, 8a) dont la largeur (c) s'étend de part et d'autre du sommet secondaire et dont la longueur (d) s'étend sur au moins ⅔ de la longueur totale de la douille de préhension (I), lesdites nervures (11) étant agencées de manière que leurs parties superficielles soient situées à l'intérieur du contour théorique externe de la douille de préhension.

2. Pièce à main technique suivant la revendication 1, caractérisée en ce que les nervures (11) présentent une courbure de forme elliptique.

3. Pièce à main technique suivant la revendication 1, caractérisée en ce que les nervures longitudinales (11) présentent une largeur constante et sont disposées suivant une distribution qui correspond à une disposition uniforme prévue sur la périphérie d'un cercle.

4. Pièce à main technique suivant l'une des revendications 1 à 3, caractérisée en ce qu'il lui est accouplé un bloc d'entraînement (2) dont le contour externe est circulaire et qui présente, sur sa surface latérale, des nervures longitudinales (11) qui sont réparties uniformément sur la périphérie.

## Claims

1. A handpiece, particularly for dentistry purposes, having a longitudinal gripping sleeve which has a cross-sectional shape whose width in the gripping region is constant from the drive end (5) to about two-thirds of the overall length (1) of the gripping sleeve, whose thickness reduces from the central region of the gripping sleeve (Fig. 5) towards both the ends (5, 6), and which contains profiled portions arranged opposite one another on its outer surface, characterised in that in its outer contour the gripping sleeve (1) is elliptical in cross-section, the ratio of the two ellipse axes (a, b) being unequal to unity in the central region of the handle sleeve (Fig. 5) and becoming equal to unity in the directions of the tool and drive ends, so that a circular cross-section occurs at the ends (5, 6), the smaller ellipse axis (minor axis b) represents the width and the larger ellipse axis (major axis a) represents the thickness; and that the profiled portions are arranged in the region of the junction of the curvatures from the major apex to the minor apex of the ellipses on only two surfaces (8, 8a) which are arranged diametrically opposite to one another and whose width (c) extends over the minor apex and whose length (d) extends over at least two-thirds of the overall length of the gripping sleeve (I), in the form of elevations and recesses which are approximately rectangular in cross-section and which form grooves (10) and ribs (11) which extend along the gripping sleeve (1), the ribs (11) being such that their surfaces lie within the theoretical outer contour of the gripping sleeve (1).

2. A handpiece as claimed in Claim 1, characterised in that the ribs (11) have an elliptical curvature.

3. A handpiece as claimed in Claim 1, characterised in that the longitudinal ribs (11) have a constant width and are distributed in such a way as to correspond to a uniform arrangement on the periphery of a circle.

4. A handpiece as claimed in one of the Claims 1 to 3, characterised in that it is coupled to a drive element (2), the outer contour of which is circular and which contains longitudinal ribs (11) arranged so as to be uniformly distributed over the periphery of its casing surface.

FIG 1

FIG 2

FIG 3

FIG 4

FIG 5

FIG 6